# EUROPEAN PATENT SPECIFICATION

(11) **EP 0 717 928 B1**
(45) Date of publication and mention of the grant of the patent: **03.05.2000**
(21) Application number: 95203147.4
(22) Date of filing: 17.11.1995
(51) Int. Cl.: A01K 1/015

(54) **Absorbent animal litter comprised of sepiolite and process for the preparation thereof**
Absorbierende Tierstreu enthaltend Sepiolith und Verfahren zu ihrer Herstellung
Litière absorbante pour animaux, contenant de la sépiolite et procédé pour sa préparation

(30) Priority: 22.12.1994 ES 9402621
(43) Date of publication of application: 26.06.1996
(73) Proprietor: TOLSA S.A., E-28001 Madrid (ES)
(72) Inventor: Alvarez Berenguer, Antonio, Boadilla del monte, E-28660 Madrid (ES); Duch Martinez, Ignacio, E-28016 Madrid (ES); Camara Gandarillas, Miguel Angel, E-28012 Madrid (ES)
(74) Representative: Ungria Lopez, Javier

(56) References cited:
- EP-A- 0 087 001
- US-A- 5 094 189
- US-A- 5 176 107
- US-A- 5 183 010
- US-A- 5 193 489
- US-A- 5 339 769
- US-A- 5 359 961

## Description

The present invention fits in the technical field of animal litters, especially for cats, used to collect the excrements thereof.

More specifically, the present invention refers to a new litter comprised of sepiolite, whose physical characteristics and composition allow a form of selective elimination of excrement in a much more convenient and hygienic manner than with traditional mineral litters of sepiolite or light clays.

As it is known, sepiolite is a clay mineral belonging to the group of phyllosilicates known as sepiolitepalygorskite and it chemically corresponds to a hydrated magnesium silicate.

Phyllosilicates are formed by two-dimensional layers of silicon and oxygen tetrahedrons and sheets of aluminum or magnesium octahedrons and oxygen-hydroxyls. The organization of these tetrahedral and octahedral layers and the composition thereof, give rise to the different clayish minerals.

In broad outline two types can be distinguished:
- Minerals 1:1, comprised of sheets formed by a tetrahedral layer and another octahedral layer that share oxygen atoms.
- Minerals 2:1 whose lamellar particles are formed by a center octahedral layer and two tetrahedral layers with which oxygen atoms are shared.

These lamellar particles are stacked parallel one on top of the other in most clayish minerals.

Sepiolite can be considered a 2:1 mineral though with a structure that differs totally from the rest of the lamellar minerals, since the tetrahedral layer of silica is continuous but with the apical ends of the silica tetrahedron reversed every six tetrahedral units, which produces gaps in the octahedral magnesium layer. This structure is similar to a brick wall where a brick is alternately removed. As a result of this particular crystalline lattice, the shape of the sepiolite particles, instead of being lamellar as in the rest of the phyllosilicates, it is acicular having channels directed in parallel to the longitudinal axis of the particle. These channels are called zeolitic channels by analogy with the channels present in zeolites.

Three types of active centers can be distinguished in the sepiolite structure:
1.- Oxygen atoms of the layer of silica tetrahedrons.
2.- Water molecules coordinated with the magnesium ions of the edges of the structure that can form hydrogen bridges with the absorbed species.
3.- Silanol groups (Si-OH) caused by the breakage of the Si-O-Si bonds on the outside surface of the tetrahedral layer. These groups are located at intervals of 5 Å along the axis of the fiber and can interact with absorbed molecules on the outside surface of the sepiolite, being able to form covalent bonds with certain organic reagents.

Another important characteristic is that the three-dimensional structure of sepiolite is rigid and neither swelling nor a structural change can take place, as a result of the absorption of molecules in the crystalline lattice unlike that what happens with lamellar phyllosilicates such as smectites, where the entry of molecules in the interlamellar space causes the sheets to separate and the particles to swell. Due to the rigid crystalline lattice thereof that makes swelling of particles impossible and at the high attraction force that keeps them together forming bundles, the sepiolite particle maintains the mechanical resistance thereof, even when it is saturated with liquids.

This special crystalline structure is responsible for the basic properties of sepiolite.

The adsorptive properties are a result of the large surface area of the material (around 310 m²/g), due to the presence of the zeolite channels and to the existence of active adsorption centers.

Sepiolite particles are found, in their natural state, agglomerated forming large bundles of randomly arranged acicular particles. The formed structure is very porous, with a high volume of mesopores and macropores. The sepiolite channels permit absorption of liquids by capillary suction, there likewise being, selective adsorption inside the channels that act as molecular screens. The anisometry of the particles, together with the surface characteristics of sepiolite, are basically responsible for the rheological properties of the material.

Sepiolite has a large variety of industrial uses thanks to the special physico-chemical properties thereof (Table 1) that can be modified by mechanical, thermal or chemical treatments and thus improve certain properties of the mineral for use thereof in different technological applications.

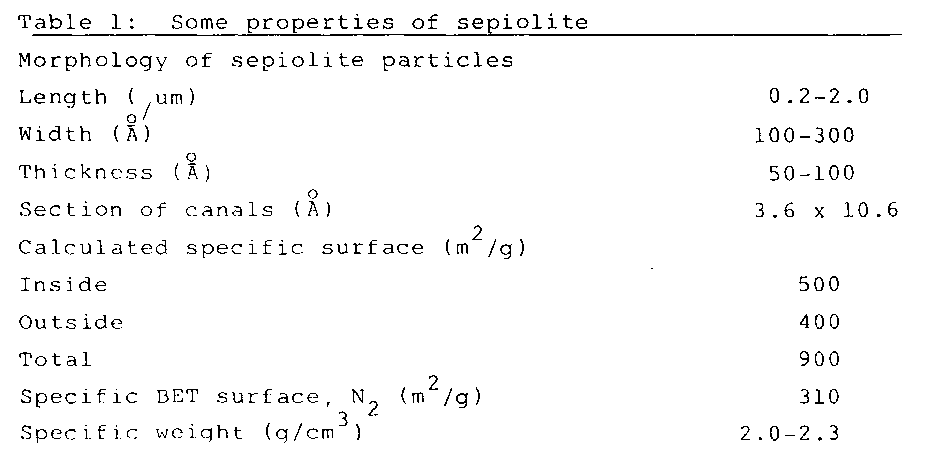

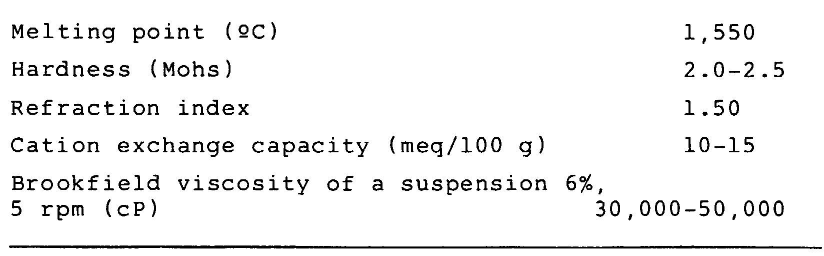

On the other hand, sepiolite has absorption and adsorption properties.

Absorption implies the contact of one free fluid phase with a rigid, durable solid phase that has the property of taking and storing the fluid. A porous or permeable structure is necessary to ensure a high absorption capacity. The absorption processes permit storage of fluids on a solid support and they can be used to control of liquid wastes and spills, facilitating the handling and treatment thereof. Likewise, absorption of dangerous and corrosive liquids on an inert support makes a safer handling of this type of product possible.

The particle size, particle size distribution, micropores, capillary structure and surface chemistry play an important role in the mechanisms of absorption and adsorption.

Sepiolite has all the characteristics that an absorbent granulate must have, such as mechanical resistance, chemical inertia and a large surface. Sepiolite granules have a high porosity due to the microporosity that constitute the canals that pass through each particle and to the macropores comprised of the empty space that remains between the particles that form the sepiolite granules. Sepiolite absorbs large amounts of liquids by means of capillary suction mechanisms thanks to the high porosity of its structure that gives it a large specific surface. The volume of liquid that sepiolite is capable of absorbing depends on different factors such as the density of the liquid, the viscosity, surface tension and, of course, the nature and polarity thereof; as well as the particle size of the grain of sepiolite. However, in general sepiolite has very high absorption values of liquids and solvents of a different nature (Table 2), having a very rapid absorption kinetics. The absorption capacity of sepiolite increases as the particle size reduces, in other words, as the outside surface through which the liquid inside the particle begins to spread and be absorbed.

**Table 2.**

| Absorption capacity (%) of different liquids in terms of the sepiolite particle size | | | | | |
|---|---|---|---|---|---|
| ASTM Mesh | 6/15 | 6/30 | 15/30 | 30/60 | 60/120 |
| Max. size (mm) | 3,35-1,18 | 3,35-0,60 | 1,40-0,60 | 0,60-0,25 | 0,25-0,125 |
| Water | 60,5 | 84,5 | 121,1 | 144,8 | 163,7 |
| Methanol | 36,7 | 40,2 | 49,4 | 84,0 | 95,2 |
| Paraffin oil | 45,6 | 51,5 | 54,9 | 90,6 | 91,8 |
| Methyl isobutyl ketone | 37,4 | 44,4 | 51,7 | 83,8 | 86,8 |
| Mineral Spirits | 44,1 | 46,0 | 55,0 | 58,3 | 93,8 |
| SAE 10 Oil | 42,1 | 45,1 | 57,0 | 88,2 | 93,2 |
| SAE 90 Oil | 41,7 | 44,5 | 45,4 | 65,0 | 94,1 |
| Cutting Oil | 59,0 | 71,2 | 87,3 | 137,9 | 161,4 |
| 96 O. Gasoline | 38,2 | 45,2 | 47,6 | 60,0 | 72,0 |
| Gas-Oil | 42,4 | 44,4 | 55,2 | 84,8 | 88,0 |
| Na(OH) 50% | 122,8 | 132,4 | 187,2 | 237,4 | 249,6 |
| NHO₃ 60% | 106,7 | 118,0 | 140,7 | 192,7 | 198,7 |
| HCl | 102,0 | 102,2 | 148,7 | 164,0 | 175,3 |

In lamellar clays the absorption is produced by insertion of the liquids between the sheets of the mineral producing swelling of the particles, for the purpose of making place for the absorbed species. As a result, the particles of the mineral break up and the liquid saturated becomes slippery due to the easy particle-particle sliding, wherein the liquid acts as a lubricant of these lamellar particles. However, in the case of sepiolite, the structure is porous but rigid and does not undergo any dimensional change after the absorption process, maintaining the consistency and mechanical resistance thereof.

Sepiolite can be considered as a crystalline rigid sponge capable of encasing large amounts of liquids that remain stable inside the structure of the grain.

Due to these properties, sepiolite is used as a household and industrial absorbent for the control and handling of liquid wastes. However, sepiolite can also be used in active adsorption processes of certain compounds and molecules.

As it has been indicated above, an important characteristic of the structure of sepiolite is the presence of channels that pass through the particles parallelly to the longitudinal axis thereof. These channels have dimensions of 3.6 x 10.6 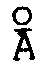 and they provide a high specific surface, making it possible to act as a molecular screen, absorbent and adsorbent of liquids, gases and vapors. The total theoretic specific surface of sepiolite, calculated on structural models, is 900 m²/g, of which 400 correspond to the outside area and 500 to the inside area.

Absorption of sepiolite is very high due to the extremely fine habit of its particles that provide it a high accesible external surface; however, its adsorption capacity also depends on the capacity of the sorbate molecules to penetrate in the zeolitic channels which is dependent, in turn, on the size of the molecule as well as on the shape and polarity thereof.

Due to the polar nature of its surface, sepiolite preferably and selectively adsorbs polar molecules. In general, the liquids that are more strongly adsorbed are those that contain polar groups or polarizable bonds, while saturated compounds such as paraffin hydrocarbons are adsorbed more weakly.

The interaction of sorbate with the surface of sepiolite also increases as the basic nature of the sorbate increases, therefore the interaction with this type of compound can take place in acid sites of the surface.

Non-polar compounds interact with the surface, mainly through Van der Waals bonds, though in some cases, interactions can be produced with silanol groups (-SiOH) that are very abundant on the sepiolite surface, being present at intervals of 5 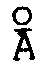 along the particle, with a density of 2.2 groups/100 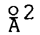 .

Likewise, sepiolite can interact and adsorb organic molecules with a high molecular weight, such as polypeptides and enzymes.

Sepiolite also has a good capacity of interaction and adsorption of microorganisms, possibly interacting with certain compounds of its membrane or cell wall such as proteins, glycoproteins, peptidoglycanes, etc. For example, sepiolite selectively adsorbs methanogenic bacteria (methanesarcine) in contrast to competitive bactria of the sulfate reproducing type, which converts sepiolite into a good biomass support for treating waste water. Likewise, sepiolite adsorbs bacteria, and to a lesser degree, fungi of polluted water (Table 3).

**Table 3.**

| Adsorption of microorganisms | | | |
|---|---|---|---|
| Microorganisms | Initial concentration (cells/ml) | Final concentration (cells/ml) | Percentage of adsorption (%) |
| Total mesophilic aerobic bacteria | 656.000 | 193.000 | 70,6 |
| Sporular mesophilic anaerobic bacteria | 280 | 40 | 85,7 |
| Fungi | 134 | 67 | 49,8 |
| Enterobacteria | 1.100.000 | 93.000 | 91,5 |
| Pseudomonas | 4.600.000 | 930.000 | 79,8 |
| Streptococus | 4.300 | 1.500 | 65,1 |
| Clostridium | 9.500 | 2.500 | 76,3 |
| E. coli | 268.000 | 11.000 | 95,9 |
| Micrococus | 495.000 | 105.000 | 78,8 |
| B. cereus | 600.000 | 0 | 100,0 |

Sepiolite has a high specific surface, that, together with its porosity and the presence of zeolitic channels, makes it possible to absorb water and liquids of a different polarity in proportions higher than 100% of its own weight.

The existence of active centers on its surface likewise allows selective adsorption of different types of molecules. These properties allow use thereof as an absorbent granular product with household uses such as animal litters, industrial absorbent for the control of wastes or spills, a deodorant product capable of adsorping molecules responsible for offensive smells, such as putrescine, cadaverine, indole, butanal or ammonia, pariffin stripping agent, mineral and vegetable fats and oils, cigarette filters, phytosanitary support, catalyst support, etc.

As to the rheological properties, the acicular particles of sepiolite are found in nature forming bundles or aggregates of particles, that are kept together thanks to the existence of forces between particles, in such a way that the aggregates do not spontaneously break up when sepiolite is dispersed in water or in other liquids.

However, sepiolite can be subjected to special micronization processes that separate the bundles into their individual particles giving rise to products that easily disperse in water and in other polar liquids. When they disperse in a fluid, the acicular particles of sepiolite with a high anisometry for a structure in a lattice of interlaced particles of a large volume, that traps all of the solvent, giving rise to high viscosity dispersions.

The rheological behavior of these suspensions is pseudoplastic or thixotropic, in other words, when the suspension is subjected to shearing force, the structure of the figures breaks down and the particles are oriented in the direction of flow, producing a reduction of the viscosity. When the shearing force ceases, the structure is recovered and the viscosity increases again.

These characteristics permit the use of sepiolite in systems of a very different nature as a thickening agent, dispersion agent and thixotropic agent.

With these functions, it can be used in paints, plastisols, asphaltic coatings, greases, fertilizing suspensions, fiber cements, etc.

As to the catalytic properties, the centers that exist on the sepiolite surface, aside from playing an important role in adsorption processes, they are useful in certain catalytic reactions. In this sense, use of sepiolite as a catalyst, among others, in the conversion of ethanol into ethylene and to break lactonic rings of precursor molecules of dyes during the developing of color on self-copying paper, has been described.

Presently, clays are used as absorbent materials for wastes of pets (for example, cat litter), to clean up oil or grease spills, as decolorizing earth, absorbents for pharmaceutical uses, support for chemicals, etc. The absorption applications for clays can be reckoned nowadays to be more than 2 million tons, twice that of ten years ago. Most of this growth is due to the increase in the consumption of abosrbent products for pets, though the demand for industrial absorbents and special products of a high added value has also contributed thereto. The clays used most traditionally as absorbents are bentonite, attapulgite, sepiolite and fuller's earth.

Bentonite is the popular term commercially used for a clay basically comprised of smectites. Smectite is the name used for a group of phyllosilicates 2:1 or lamellar silicates of which the most important ones are montmorillonite, beideillite, nontronite, saponite and hectorite. Montmorillonite is, by far, the most abundent smectite, comprising more than 99% of the world production of this type of clay. Montmorillonite is the predominant mineral in bentonite and fuller's earth. The presence of sodium or calcium as an exchangeable ion greatly influences the properties of montmorillonite, above all in the swelling characteristics. Montmorillonites with a high sodium content, typical of the Wyoming deposits, reveal greater swelling properties, while montmorillonites with a high calcium content, reveal limited swelling characteristics. Montmorillonites that contain mixtures of sodium and calcium varieties, have intermediate swelling properties, though varieties with a high clacium content can be exchanged by sodium to increase the swelling capacity thereof.

Smectites are normally very thin sheets with a very small particle size, which gives the material a relatively high specific surface (100 m²/g.) Smectites also have a high cation exchange capacity, in the neighborhood of 60-100 meq/100 g of clay. These characteristics give smectites a high absorption capacity for many materials.

Sepiolite and attapulgite are also phyllosilicates 2:1 belonging to the group of palygorskite, with a microfibrous morphology. The presence of micropores and channels in the structure of these clays, together with the elongated habit of the fine particles thereof make the specific surface thereof very high and they can absorb and adsorb countless materials. The BET surface accessible to N₂ of sepiolite is about 300 m²/g compared to 150 m²/g of attapulgite, due to the larger section of the channels of sepiolite which permit easier access of sorbates.

Fuller's earth take their name from the first use thereof in absorbing greases and powder of natural wool and fabrics. In the United States the term refers to attapulgites and calcium montmorillonites, and in Europe only to calcium montmorillonites.

Undoubtedly, one of the most important markets for absorbent clays is the cat litter market. The cat litter market is very large and continuously growing, in the United States as well as in Europe. The cat population is growing day by day, which is shown by the sales of cat litters over the last few years. The European cat litter market exceeds one million tons a year, of which 90% are clays, basically sepiolite, attapulgites and calcium bentonites. The remaining 10% consists of different non-mineral or synthetic mineral products, such as paper wood and plant derivatives, as well as synthetic calcium silicate and gypsum preparations.

Cat litters have to have a series of essential characteristics related to adsorption, density, grain size, powder formation, smell control, and of course, they have to be accepted by cats. Acceptance is fundamental to prevent behaviour changes that could alter the cat's hygienic habits. Clay has to have a great urine absorption capacity, a great feces dehydration capacity and it must reduce the formation of smells and inhibit bacterial growth. Cats are repelled by wet and bad smelling litters.

The particle size distribution of the grains is also important and it tends to be between 0.6 and 4 mm. They must not stick to the animal's paws or fur and must have rounded surfaces so that the pads of the paws are not hurt.. Litters have to be dust free and the grains must have a suitable mechanical resistance to prevent formation thereof during handling. Other characteristics such as color and methods to do away with the material used are also fundamental.

The clays used as cat litter can be divided up into heavy and light ones. Heavy litters included fuller's earth and bentonites, with apparent densities of 800-1000 kg/m³, while light litters include sepiolites, attapulgites and diatomites, with densities between 400-700 kg/m³.

Another type of cat litter is the so-called clumping litter. It is comprised of sodium and calcium bentonites or mixtures of sodium bentonite with other clays, with small particle sizes. These materials, when exposed to liquids, their particles are capable of expanding and adhering, giving rise to the formation of agglomerates. Hence, these agglomerates with cat urine and excrements can be disposed of, leaving the rest of the litter clean and ready for use.

Light litters are the type used most on the European market, comprising more than 70% of the total production. The clays used most are Spanish sepiolite, Senegalese attapulgite and Danish diatomite. The Spanish production used on the European market exceeds 600,000 MT yearly.

The future tendency of the cat litter market reveals a continued demand, since the cat population is increasing and more and more owners buy these materials.

Hereinafter reference is made to certain patents related to the object of the present invention:
- In US-A-4591581, Crampton and Whiting of Laporte Industries Ltd. describe a process for manufacturing absorbent particles comprised of clay, that implies a selection of particles, a drying stage and mixing with a water dispersable colloid. Subsequently the mixture must be compressed in a press and ground and the mass obtained classified up to a particle size between 0.71 and 4 mm. The resulting product is usable as cat litter.

In US-A-4634537, Alexander of American Colloid Company, describes a composition comprised of water swellable clays and water soluble gums which is particularly useful in drilling mud and sealing of dumps.
- In US-A-4685420, Stuart of Dow Chemical Company describes an animal litter that consists of an inert solid porous substate and of a powdered synthesis polymer. When the animal urine comes in contact with this composition, agglomerates that can be removed from the rest of the litter are formed.
- In EP-A-424001, Hughes of Americal Colloid Company describes a composition and method to absorb animal wastes. It consists of loose particles of 50 µ to 3350 µ of an uncompacted water-swellable bentonite, that effectively absorbs animal wastes and simultaneously agglomerates them in stable masses that allow the physical separation of the wastes from the rest of the clean particles.
- In US-A-5180064, House of Venture Innovations Inc. describes a method to increase the absorption capacity of smectite clays, capable of swelling, such as sodium montmorillonites. The invention provides a clumping litter with great cohesion and that consists of a mixture comprised of clays with osmotic swelling, a cellulose material and a density controlling material. In this way the deficiences observed in the inventions described in the two previous references, which are the excessively high density of the material, the low cohesiveness of the wet litter, the low urine absorption and the subsequent dampening of the mass of clean litter that is produced before the agglomerates are removed, are improved.
- In US-A-5207830, Cowan, House and Harrington of Venture Innovations Inc. describe a complicated process for the manufacture of slightly cemented particles suitable to absorb liquids, consisting of mixing cement grout aerated with a particle forming agent that is subsequently aged for enough time so that the particles are formed and harden for subsequent handling, is described. This absorbent composition comprises a cementing material, water, a frothing agent, a particle forming agent, plasticizers and additives that improve absorption.

In US-A-5193489, Hardin of Laporte Inc. describes an animal litter prepared from earths having only poor or even no clumping ability to which a dispersible gum selected from galactomannan gums is mixed so as to confer clumping ability to the litter.

### BRIEF DESCRIPTION OF THE FIGURE

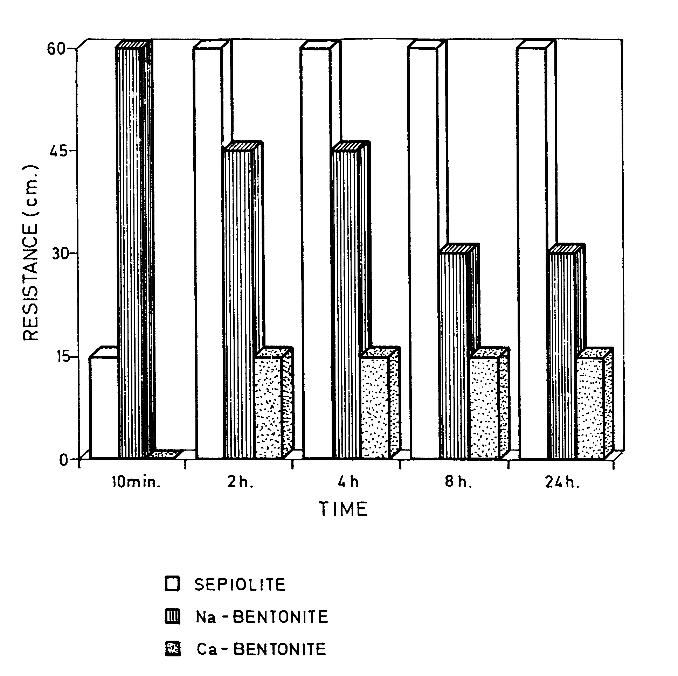

Figure 1 is a histogram wherein the resistance of the agglomerates to time, corresponding to the experiments of Example 4 is represented.

The present invention as claimed refers to a new absorbent animal litter comprised of sepiolite or sepiolite clay, to a process for the preparation thereof, and to a method of increasing and prolonging the mechanical resistance of agglomerates formed in animal litters when the animal litter comes into contact with liquid animal excrements.

The present invention thus refers to a special animal litter and, especially, cat litter, comprised of sepiolite, whose physical characteristics and composition permit a form of selective elimination of excrements thereof that is much more convenient and hygienic than with traditional mineral sepiolite or light clay litters. These types of litters, well known for many years, act by absorbing liquid wastes of pets in all the mineral mass, since upon being deposited they seep through the bed of particles, until they reach the bottom of the box. The particle size distribution of these litters tends to basically be in the range of 6 to 30 ASTM mesh (3.35 to 0.6 mm), where each particle size carries out its function. The thickest particles remain in the top part, ensuring that the material is not dragged by the cat outside the box and providing a hygienic and attractive appearance. The middle-size particles act by absorbing the liquids and covering the solid excrements. The finest particles, that have the maximum absorption power, are preferably accumulated in the bottom, preventing the absorbed urine to give off an unpleasant odor. Contrary to traditional heavy clay or bentonite litters, that in contact with the liquids swell and form agglomerates that can be periodically removed, conventional animal litters comprised of light clay do not have such a clear and easy form of selective elimination. This is due to their natual swelling incapacity conditioned by their structure and composition. In some of them it is possible to separate by gravity the particles that are still clean and others change colour when it is necessary to replace them. However, in comparison to bentonites they have the advantage of maintaining their granular appearance, even when saturated with liquid, hence they are easily manageable and they do not form clay.

The litter composition that the invention refers to comprises non-swellable absorbent light clays, especially sepiolites, that surprisingly and unexpectedly form agglomerates that can be separately removed from the rest of the material upon coming in contact with animal liquid wastes. The combined synerqic effect of non-swellable absorbent light clay or sepiolite with a type of polymer activable in an aqueous medium, allows the described behavior. Therefore, when the animal urine comes in contact with the composition comprised of non-swellable absorbent light clay or sepiolite and of an absorbent polymer, activable in water, of an animal or plant origin in the suitable proportion, is rapidly absorbed in a discrete localized area, the clay rapidly agglomerating into a defined stable mass, with enough cohesion so as to be easily handled and removed from the rest of the composition that remains clean and dry. This operation can be carried out by the user from the moment when the agglomerate is formed until many hours later conveniently and without unpleasant odors being produced. The solid excrements that the animal deposits are rapidly covered and dried by the granules of the composition comprised of sepiolite or non-swellable absorbent light clay and of an absorbent polymer activable in water. Subsequently it is necessary to replace the used up material from time to time.

With the use of traditional animal or cat litters comprised of light absorbent mineral types or clays such as sepiolites, attapulgites, diatamites, with mixtures of other clays, carbonates, etc., the pet owners remove the deposited solid excrements daily. However, with urine this operation is impossible since it is distributed all over the litter upon being absorbed by the material. If urine is not rapidly eliminated it begins to age after about 24 hours, giving off a characteristic very unpleasant odor. If this situation is prolonged, the smell of the decomposed urine can be so unbearable that the pet owner is forced to throw away the entire litter and to replace it entirely, even before its absorbent capacity has been used up, with the subsequent inconveniences and expenses involved.

Therefore, it is the object of the present invention to provide animal litters, especially cat litters, with very advantageous characteristics with regard to conventional litters comprised of light clays or sepiolites. A litter with better characteristics that makes the physical removal of animal urine from the box possible, is obtained. In this way, the use of the litter is prolonged, which represents a considerable saving for the user and less residues to be thrown away with the garbage are produced. With the use of this product and elimination method, pets always have a clean and odor-free litter and the tasks of cleaning and maintenance are made much easier for the owner.

The animal litter of the present invention comprises an absorbent porous granular solid comprised of sepiolites or sepiolite clay with variable contents of other mineral types such as smectite, calcite, quartz, feldspar, dolomite and a polymer or mixture of absorbent polymers, activable in water, of plant or animal origin.

The absorbent porous granular solid comprised of sepiolite or sepiolite clay does not swell itself only in the presence of liquids and has a liquid absorption capacity higher than its own weight. The particle size of the porous granular solid corresponds to a granulometric distribution especially designed to prevent vertical passage of the animal liquid wastes upon using the litter and enhancing its lateral absorption. Likewise, the granulometric distribution of the product favors mixing with the polymer or mixing of absorbent polymers activable in water, of plant or animal origin, without producing separation or dust. The particle size of the absorbent porous granular solid comprised of sepiolite or sepiolite clays is between 6 and 60 ASTM mesh (3.35 mm and 0.25 mm) and preferably between 16 and 35 ASTM mesh (1.8 and 0.50 mm.) The apparent density of the absorbent porous granular solid is between 400 and 800 g/l, and preferably between 500 and 700 g/l.

The polymer or mixture of absorbent polymers, activable in water of animal or plant origin can be selected from among a large number of natural or synthetic compounds such as cellulose and starch derivatives, gums from algae, plants or microorganisms, polysaccharides and derivatives thereof, seed oils and animal glues, with known use in the food and pharmaceutical industries and that are not at all toxic nor harmful to the environment.

The animal litter of the present invention is made by means of a simple and rapid industrial process with a very low energy expenditurem economically feasible and capable of meeting the growing demand of the market for this type of product. It basically consists of a dry mixture of the absorbent polymer activable in water, in a dose of 0.1 to 10%, with the porous granular sepiolite solid until until the perfect homogenization thereof. The mixing process is carried out in such a way that no separations or dust are produced. It is improved if the polymer is previously supported on a fine fraction of sepiolite particles of a similar size. However, according to the nature and way of activation of the absorbent polymer, it is also possible to include the same by means of a wet process in which a liquid suspension of the polymer is sprayed on the porous granular solid comprised of sepiolite and it is homogenized.

By means of the described process and thanks to the synergy between the absorbent properties of the granular solid comprised of sepiolite or sepiolite clay and the agglomerating properties of the absorbent polymer activable in moisture, an absorbent composition for animal and cat litters with surprisingly advantageous properties over traditional absorbent litters is obtained, inasmuch as the traditional litters are now capable of agglomerating the animal wastes in defined and stable masses that can be periodically removed from the tray that contains the absorbent granular material, making the maintenance thereof very easy, preventing unpleasant odors from being produced, prolonging the useful life of the litter and generating few wastes.

With the use of this composition and method, the animals always have a clean bed that fully satisfies their hygienic instincts.

The animal litter of the invention is comprised of a light material and therefore easy for the buyer to transport and use. It has an attractive and natural color that goes from white to cream, so that animals are well atracted to it. The sepiolite or sepiolite clay that comprises the litter of the present invention does not need any previous treatment to improve its activity, its absorbing power or to modify its density. The agglomerates that are formed in using this composition are very mechanically stable and they can be removed immediately after formation with a small shovel. No mud is formed and the agglomerates do not break up and they perfectly resist scratching and prying of animals. The consistency thereof increases with time, thus, when they are to be removed and replaced by new material, they do not break. Although the form of use and maintenance of this composition prevents any type of unpleasant odor coming from animal wastes from being produced, the special deodorizing activity of sepiolite against ammonia and different volatile amines, typically contained in aged cat urine, as well as the bacteriostic activity thereof, are noteworthy.

Therefore, in accordance with the above, the new litter of the present invention is comprised of a homogeneous mixture of:
a) an absorbent porous granular solid comprised of sepiolites or sepiolite clays with variable contents of other mineral types selected from among smectite, calcite, quartz, feldspar and dolomite, with a granulometric particle size distribution between 6 and 60 ASTM mesh and an apparent density between 400 and 800 g/l;
b) a polymer or mixture of absorbent polymers activable in water of plant or animal origin, selected from among cellulose and starch derivatives, gums coming from algae, plants or microorganisms, polysaccharides and derivatives thereof, seed oils and animal glues, the amount of polymer in relation to component a) being 0.1 to 10% by weight.

The process for the preparation of said litter is characterized in that it comprises:
(i) dry mixing the absorbent polymer activable in water (b) in the mentioned amount with the porous granular solid of sepiolite (a) until the perfect homogenization thereof; or else;
(ii) spraying a liquid suspension of polymer (b) on the porous granular solid of sepiolite (a), homogenizing and drying.

The litter of the present invention has clear advantages over the ones described in patents of the prior art. Hence, with regard to U.S. patent no. 4591581, the composition of the present invention does not require prior conditioning of the clay particles nor drying, pressing, grinding or classification stages. The mixing of the agglomerating additive is done by a simple and inexpensive industrial process and the final product has a lower particle size, more favorable for the formation of agglomerates in contact with liquids.

Contrarily to US-A-4634537, in the present invention water-swellable clays are not used and their use is in the sect r of absorbent materials for pets.

As to US-A-4685420, the composition of the present invention uses natural polymers, not obtained by costly synthesizing processes, without any risk for the health of the animals and they are not contaminating ones. Besides, the nature and properties thereof are especially designed to complement the absorbent and deodorizing effect of sepiolite or sepiolite clays, not producing the same combined effects with any other inert porous substrate.

With respect to EP-A-424001, the composition of the present invention consists of particles of sepiolite, non-swellable clay with a structure, composition and characteristics different from those of bentonites. The participation of an agglomerating additive comprised of natural polymers activable in water cause contrary to what is expected the sepiolite to be capable of agglomerating its particles in the presence of liquids, obtaining a product with a high performance in use producing few wastes, a clear color and attractive color and a natural aspect, clearly different from the composition comprised of swellable sodium bentonite. The manufacturing process is also very favourable from an economic point of view. Continuity of the supply of a top quality product at competitive pricesses can be ensured for the European market.

Contrarily to US-A-5180064, the composition of the present invention, comprised of sepiolite and natural polymers, has in itself a very suitable density and does not require the addition of density controllers. It has a great urine absorption capacity and is always kept dry despite the accumulation of various urine aggomerates in the center of the litter.

As to US-A-5207830, the composition of the present invention is prepared by means of a simple and economic process that does not require costly mixing, stirring, aerating, aging and dosing processes.

The present invention is additionally illustrated by means of the following Examples, which do not seek to limit the scope thereof.

### EXAMPLE 1

3 kg. of an absorbent granular sepiolite with a particle size between 60 and 30 ASTM mesh (traditional litter) were placed on a plastic tray measuring about 30 x 40 x 10 cm. On another tray with the same characteristics, 3 kg of the granular sepiolite object of the invention, with a particle size between 16 and 50 ASTM mesh were placed.

120 ml. of an ammonia solution divided up into 6 aplications of 20 ml. simulating a cat's behaviour were applied daily to each material. The litter object of the invention, given its special characteristics, allowed selective removal of the 6 agglomerates formed, which was done the day after each application. No maintenance operation was carried out with the traditional litter. Seven days later, the traditional litter gave off a strong ammonia odor and the finest particles accumulated in the bottom, were saturated with liquid; hence it was considered to be no longer usable. Knowing that the liquid absorption capacity thereof (Westinghouse method) is 93%, theoretically 903 g have been used in absorbing the ammonia solution, therefore the performance in use is only 30 %. Seven days later, the litter object of the invention has no odor at all and is perfectly dry and only the 509 g. that correspond to the absorption capacity thereof have been used up, therefore, performance in use is 100 %. With the use of the litter object of the invention, the savings of material are considerable and there are no problems with unpleasant odors.

### EXAMPLE 2

In an outdoor cattery, two homogenous groups of 5 animals (4 females and 1 male) were formed and two types of agglomerating litters, one the object of the present invention and the other comprised of American sodium bentonite were tested with them for 24 days. A single tray for each group that contained the material to be tested was used, filling the same up to a depth of about 5 cm. The caretaker removed daily the agglomerates of urine and the solid feces and replaced the necessary amount of each material to maintain the thickness of the layer. After the test time was over, the amount of material used up of the litter object of the invnetion was 26.54 kg and the amount of litter comprised of bentonite was 39.37 kg, which represents an expenditure 48 % higher.

### EXAMPLE 3

In a sampling carried out with 200 cat owners in their homes, the two materials of example 2 were tested for two weeks (each product 1 week) and the material was handed over in 4 kg. boxes. After this period was over, the excess material not used by the animals was to be returned and a questionnaire was to be filled out. No significant differences as to the consumption of each material, about 1.5 kg. were found; however, the responses on the questionnaire clearly indicate that the material object of the invention has a better appearance, more attractive color, produces less dust and has a more suitable density.

### EXAMPLE 4

For the purpose of evaluating the mechanical resistance of the agglomerates that are formed in contact with liquids, three types of agglomerating absorbent cat litters were tested. To the two types used in examples 2 and 3, an aggomerating litter comprised of calcium bentonite was now added. The evaluation of the mechanical resistance was done by dropping on ahard flat surface, from increasing heights, aggomerates of each material formed with 20 ml. of water and letting them evolve for 10 minutes, 2 hours, 4 hours, 8 hours and 24 hours respectively. The results are represented in Table 1 and in figure 1. One can see how after 10 minutes the only agglomerate of maximum resistance corresponds to American sodium bentonite, since swelling forms a rigid and impermeable structure. However, at such a short time agglomerates are not normally collected in a real case with animals of this type of litter. After 2 hours, the maximum resistance is only obtained with the material object of the present invention, which is also maintained in time. The resistance of the American sodium bentonite drops since upon drying the agglomerates become very fragile. Calcium bentonite, though its resistance improves slightly with time, the resistance is never enough since its agglomerating effect is very poor.

| RESISTANCE | SEPIOLITE | Na-BENTONITE | Ca-BENTONITE |
|---|---|---|---|
| 10 min. | 15 | 60 | 0 |
| 2 h. | 60 | 45 | 15 |
| 4 h. | 60 | 45 | 15 |
| 8 h. | 60 | 30 | 15 |
| 24 h. | 60 | 30 | 15 |

## Claims

1. An absorbent animal litter which forms solid agglomerates when being contacted with liquid animal excrements and comprised of a homogeneous mixture of
an absorbent porous granular solid, and
and an absorbent polymer or a mixture of absorbent polymers, being activable in water and of plant or animal origin, selected from cellulose and starch derivatives, gums from algae, plants or microorganisms, polysaccharides and derivatives thereof, seed oils and animal glues, the polymer being present in a proportion of 0.1 to 10% by weight in respect of the granular solid
wherein the granular solid is a non-swellable absorbent light clay selected from the group consisting of sepiolite and sepiolite clays with variable contents of other mineral types selected from smectite, calcite, quartz, feldspar and dolomite;
the granular solid having a grain size granulometric distribution between 6 and 60 mesh ASTM and an apparent density between 400 and 800g/l.

2. An animal litter according to claim 1, wherein the granular solid has a grain distribution between 16 and 35 mesh ASTM.

3. An animal litter according to claim 1 or 2, wherein the granular solid has an apparent density between 500 and 700g/l.

4. An animal litter according to any of claims 1-3, wherein the granular solid is sepiolite.

5. A process for preparing the animal litter of any of claims 1 to 4, the process comprising dry mixing the absorbent polymer with the granular solid until obtaining a homogenous mixture.

6. A process for preparing the animal litter of any of claims 1 to 4, the process comprising spraying a liquid suspension of the absorbent polymer on the granular solid, homogenizing and drying.

7. A method of increasing and prolonging the mechanical resistance of agglomerates formed in animal litters when the animal litter comes into contact with liquid animal excrements, the animal litter comprising a homogeneous mixture of
an absorbent porous granular solid, and
and absorbent polymer or a mixture of absorbent polymers, being activable in water and of plant or animal origin, selected from cellulose and starch derivatives, gums from algae, plants or microorganisms, polysaccharides and derivatives thereof, seed oils and animal glues, the polymer being present in a proportion of 0.1 to 10% by weight in respect of the granular solid
wherein a non-swellable absorbent light clay selected from the group consisting of sepiolite, sepiolite clays with variable contents of other mineral types selected from smectite, calcite, quartz, feldspat and dolomite, and mixtures thereof is used as the granular solid; and wherein
the granular solid having a grain size granulometric distribution between 6 and 60 ASTM mesh and an apparent density between 400 and 800g/l.

8. A method according to claim 7, wherein the granular solid has a grain distribution between 16 and 35 mesh ASTM.

9. A method according to claim 7 or 8, wherein the granular solid has an apparent density between 500 and 700g/l.

10. A method according to any of claims 7-9, wherein the granular solid is sepiolite.

## Patentansprüche

1. Absorbierende Tierstreu, welche feste Agglomerate bildet, wenn sie mit flüssigen Tierexkrementen in Berührung kommt, und sich zusammensetzt aus einem homogenen Gemisch aus
einem absorbierenden porösen granulären Feststoff, und
einem absorbierenden Polymer oder einem Gemisch aus absorbierenden Polymeren, die in Wasser aktivierbar und pflanzlichen oder tierischen Ursprungs sind, ausgewählt aus Cellulose und Stärkederivaten, Gummen aus Algen, Pflanzen oder Mikroorganismen, Polysacchariden und Derivaten davon, Samenölen und Tierleimen, wobei das Polymer in einem Anteil von 0,1 bis 10 Gew.-%, bezogen auf den granulären Feststoff, vorhanden ist
wobei der granuläre Feststoff ein nicht quellfähiger absorbierender leichter Ton, ausgewählt aus der Gruppe bestehend aus Sepiolith und Sepiolithtonen mit variablen Gehalten von anderen Mineralsorten, ausgewählt aus Smektit, Calcit, Quarz, Feldspat und Dolomit, ist;
wobei der granuläre Feststoff eine granulometrische Korngrößenverteilung zwischen 6 und 60 mesh ASTM und eine scheinbare Dichte zwischen 400 und 800 g/l aufweist.

2. Tierstreu nach Anspruch 1, wobei der granuläre Feststoff eine Korngrößenverteilung zwischen 16 und 35 mesh ASTM aufweist.

3. Tierstreu nach Anspruch 1 oder 2, wobei der granuläre Feststoff eine scheinbare Dichte zwischen 500 und 700 g/l aufweist.

4. Tierstreu nach einem der Ansprüche 1-3, wobei der granuläre Feststoff Sepiolith ist.

5. Verfahren zum Herstellen der Tierstreu nach einem der Ansprüche 1 bis 4, wobei das Verfahren das trockene Vermischen des absorbierenden Polymers mit dem granulären Feststoff bis zum Erhalten eines homogenen Gemisches umfaßt.

6. Verfahren zum Herstellen der Tierstreu nach einem der Ansprüche 1 bis 4, wobei das Verfahren das Sprühen einer flüssigen Suspension des absorbierenden Polymers auf den granulären Feststoff, das Homogenisieren und das Trocknen umfaßt.

7. Verfahren zum Erhöhen und Verlängern der mechanischen Beständigkeit von Agglomeraten, die in Tierstreu gebildet werden, wenn die Tierstreu mit flüssigen Tierexkrementen in Berührung kommt, wobei die Tierstreu ein homogenes Gemisch aus
einem absorbierenden porösen granulären Feststoff, und
einem absorbierenden Polymer oder einem Gemisch aus absorbierenden Polymeren, die in Wasser aktivierbar und pflanzlichen oder tierischen Ursprungs sind, ausgewählt aus Cellulose und Stärkederivaten, Gummen aus Algen, Pflanzen oder Mikroorganismen, Polysacchariden und Derivaten davon, Samenölen und Tierleimen umfaßt, wobei das Polymer in einem Anteil von 0,1 bis 10 Gew.-%, bezogen auf den granulären Feststoff, vorhanden ist
wobei ein nicht quellfähiger absorbierender leichter Ton, ausgewählt aus der Gruppe bestehend aus Sepiolith, Sepiolithtonen mit variablen Gehalten von anderen Mineralsorten, ausgewählt aus Smektit, Calcit, Quarz, Feldspat und Dolomit, und Gemischen davon als der granuläre Feststoff verwendet wird; und wobei der granuläre Feststoff eine granulometrische Korngrößenverteilung zwischen 6 und 60 ASTM mesh und eine scheinbare Dichte zwischen 400 und 800 g/l aufweist.

8. Verfahren nach Anspruch 7, wobei der granuläre Feststoff eine Korngrößenverteilung zwischen 16 und 35 mesh ASTM aufweist.

9. Verfahren nach Anspruch 7 oder 8, wobei der granuläre Feststoff eine scheinbare Dichte zwischen 500 und 700 g/l aufweist.

10. Verfahren nach einem der Ansprüche 7-9, wobei der granuläre Feststoff Sepiolith ist.

## Revendications

1. Litière absorbante pour animaux, formant des agglomérats solides lorsqu'elle est mise en contact avec des excréments liquides d'animaux et constituée par un mélange homogène de :
un solide granulaire poreux absorbant ; et
un polymère absorbant ou un mélange de polymères absorbants, qui est activable dans l'eau et d'origine végétale ou animale, sélectionné parmi la cellulose et les dérivés de l'amidon, des gommes d'algues, de végétaux ou de micro-organismes, des polysaccharides et des dérivés de ceux-ci, des huiles de graines et des colles animales, le polymère étant présent dans une proportion de 0,1 à 10 % en poids, ramenée au solide granulaire ;
dans laquelle le solide granulaire est une argile légère absorbante non gonflante choisie dans le groupe comprenant la sépiolite et des argiles de sépiolite avec des teneurs variables en d'autres types de minéraux choisis parmi la smectite, la calcite, le quartz, le feldspath et la dolomite ;
le solide granulaire ayant une distribution granulométrique des tailles de grains comprise entre 6 et 60 mesh ASTM et une densité apparente comprise entre 400 et 800 g/l.

2. Litière pour animaux selon la revendication 1, dans laquelle le solide granulaire a une distribution des tailles de grains comprise entre 16 et 35 mesh ASTM.

3. Litière pour animaux selon la revendication 1 ou la revendication 2, dans laquelle le solide granulaire a une densité apparente comprise entre 500 et 700 g/l.

4. Litière pour animaux selon l'une quelconque des revendications 1 à 3, dans laquelle le solide granulaire est la sépiolite.

5. Procédé de préparation de la litière pour animaux selon l'une quelconque des revendications 1 à 4, le procédé comprenant le mélangeage à sec du polymère absorbant avec le solide granulaire jusqu'à obtention d'un mélange homogène.

6. Procédé de préparation de la litière pour animaux selon l'une quelconque des revendications 1 à 4, le procédé comprenant la pulvérisation d'une suspension liquide du polymère absorbant sur le solide granulaire, l'homogénéisation et le séchage.

7. Méthode pour améliorer et augmenter la résistance mécanique d'agglomérés formés dans des litières pour animaux lorsque la litière pour animaux entre en contact avec des excréments liquides d'animaux, la litière pour animaux comprenant un mélange homogène de :
un solide granulaire poreux absorbant ; et
un polymère absorbant ou un mélange de polymères absorbants, qui est activable dans l'eau et d'origine végétale ou animale, sélectionné parmi la cellulose et les dérivés de l'amidon, des gommes d'algues, de végétaux ou de micro-organismes, des polysaccharides et des dérivés de ceux-ci, des huiles de graines et des colles animales, le polymère étant présent dans une proportion de 0,1 à 10 % en poids, ramenée au solide granulaire ;
dans laquelle le solide granulaire est une argile légère absorbante non gonflante choisie dans le groupe comprenant la sépiolite et des argiles de sépiolite avec des teneurs variables en d'autres types de minéraux choisis parmi la smectite, la calcite, le quartz, le feldspath et la dolomite, et leurs mélanges ;
le solide granulaire ayant une distribution granulométrique des tailles de grains comprise entre 6 et 60 mesh ASTM et une densité apparente comprise entre 400 et 800 g/l.

8. Méthode selon la revendication 7, dans laquelle le solide granulaire a une distribution des tailles de grains comprise entre 16 et 35 mesh ASTM.

9. Méthode selon la revendication 7 ou la revendication 8, dans laquelle le solide granulaire a une densité apparente comprise entre 500 et 700 g/l.

10. Méthode selon l'une quelconque des revendications 7 à 9, dans laquelle le solide granulaire est la sépiolite.
